# EUROPEAN PATENT APPLICATION

(11) **EP 2 696 479 A1**
(43) Date of publication of application: **12.02.2014**
(21) Application number: 12180054.4
(22) Date of filing: 10.08.2012
(51) Int. Cl.: H02K 5/173

(54) **A method for manufacturing an end plate arrangement of a rotating electrical machine, an end plate arrangement of a rotating electrical machine, and a rotating electrical machine**

(71) Applicant: ABB Technology AG, 8050 Zürich (CH)
(72) Inventor: Aaltonen, Sami, 09120 Karjalohja (FI); Antervo, Altti, 00380 Helsinki (FI)
(74) Representative: Kolster Oy Ab

(57) **Abstract**

A rotating electrical machine having an end plate outer ring (14) and an end plate arrangement according to the present invention. The end plate arrangement comprises a changeable insulation ring (16), a changeable end plate inner ring (15) and a changeable end plate securing ring (17). The end plate assembly (15-17) can be fitted between a rotor shaft rolling bearing (3) of the rotating electrical machine and the end plate outer ring (14) or the end frame (14) of the rotating electrical machine. The end plate outer ring (14) remains fixed during exchange of the bearing (3).

## Description

### FIELD OF THE INVENTION

The present invention relates to the field of electric machines typically used for industrial applications, such as for motors and generators used within the transportation industry, energy industry, process industry and manufacturing industry, and more particularly to a method for manufacturing an end plate arrangement of a rotating electrical machine, to an end plate arrangement of a rotating electrical machine, and to a rotating electrical machine.

### BACKGROUND OF THE INVENTION

Rotating electrical machines are used in industry for different applications, such as electric motors and generators within the transportation industry, within the process and manufacturing industry as well as within the energy industry, for example in wind turbines. Generators convert mechanical energy to electrical energy. Motors convert electrical energy to mechanical energy. Motors and generators commonly belong to the subset of rotating electrical machines.

Electric motors are found in applications as diverse as industrial applications, small and medium size industrial motors of highly standardized dimensions and characteristics provide convenient mechanical power for industrial uses. Larger electric motors are used for propulsion of ships in ship propulsion unit applications of the marine industry, for pipeline compressors, and for water pumps with ratings in the millions of watts.

An electric generator is a device used in electricity generation that converts mechanical energy to electrical energy. A generator forces electric charge usually carried by electrons to flow through an external electrical circuit. The source of mechanical energy may be a reciprocating or turbine steam engine, water falling through a turbine or waterwheel, an internal combustion engine, a wind turbine or any other source of mechanical energy.

The two main parts of a rotating electrical machine can be described in mechanical terms. A rotor is the rotating part of an electrical machine and a stator is the stationary part of an electrical machine. A rotor shaft is a mechanical component for transmitting torque and rotation. A rotor shaft is a carrier of torque; it is subject to torsion and shear stress equivalent to the difference between the input torque and the load. Rotor shafts must therefore be strong enough to bear the stress, whilst avoiding too much additional weight as that would in turn increase their inertia.

A rotor shaft of a rotating electrical machine also has a rolling bearing arrangement, like rolling bearing arrangement. The rolling bearing arrangement is a bearing which carries a load by having round rolling elements between the two pieces. The relative motion of the rotor shaft in relation to stator of the electrical machine causes the rolling elements to roll. A bearing arrangement of a rotating electrical machine does not only consist of rolling bearings but includes the components associated with the bearings such as the shaft and housing. A bearing lubricant is a very important component of the bearing arrangement because it has to prevent wear and protect against corrosion so that the bearing can deploy its full performance. A bearing arrangement seal and an end plate arrangement of a rotating electrical machine are also very important components, the performance of which are of vital importance to the cleanliness of the lubricant. Cleanliness has a profound effect on bearing service life.

In the following, the prior art will be described with reference to the accompanying drawings of Figures 1 to 2, of which:
Figure 1 shows a basic structure of an end plate arrangement of a rotating electrical machine according to prior art; and
Figure 2 shows another end plate arrangement of a rotating electrical machine according to prior art.

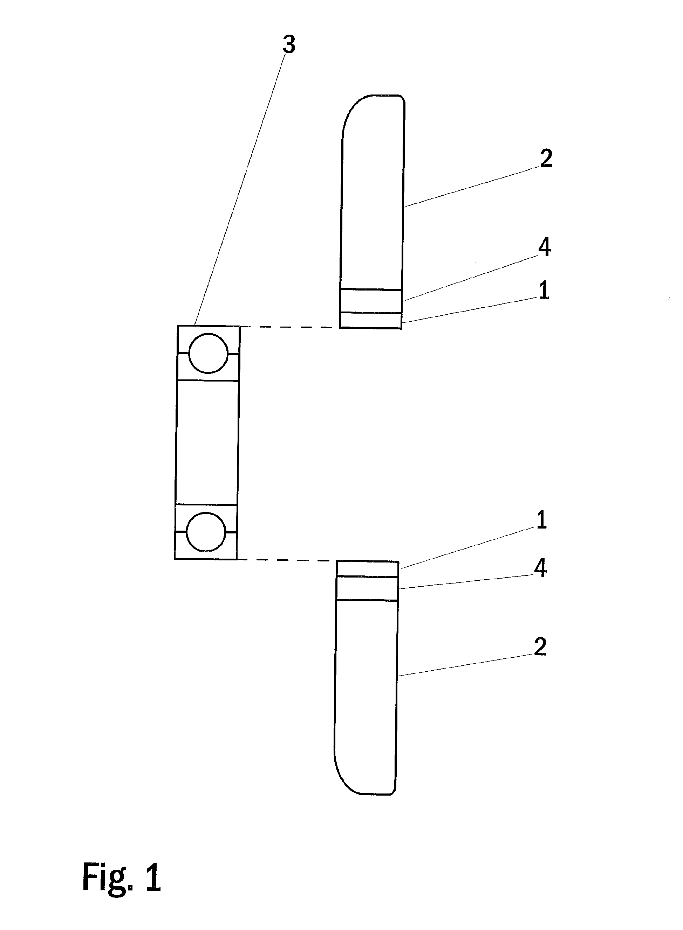

Figure 1 shows a basic structure of an end plate arrangement of a rotating electrical machine according to prior art. The end plate arrangement of a rotating electrical machine according to prior art comprises an end plate inner ring 1 and an end plate outer ring 2. A rolling bearing 3 of the rotor shaft of the rotating electrical machine is typically fitted directly to the end plate inner ring 1. Furthermore, the end plate arrangement of a rotating electrical machine according to prior art comprises an insulating ring 4 for insulating the rotor part of the rotating electrical machine from the stator part of the rotating electrical machine. The insulating ring 4 cuts the conductive path from stator to rotor via bearings and prevents bearing currents to flow through the bearings.

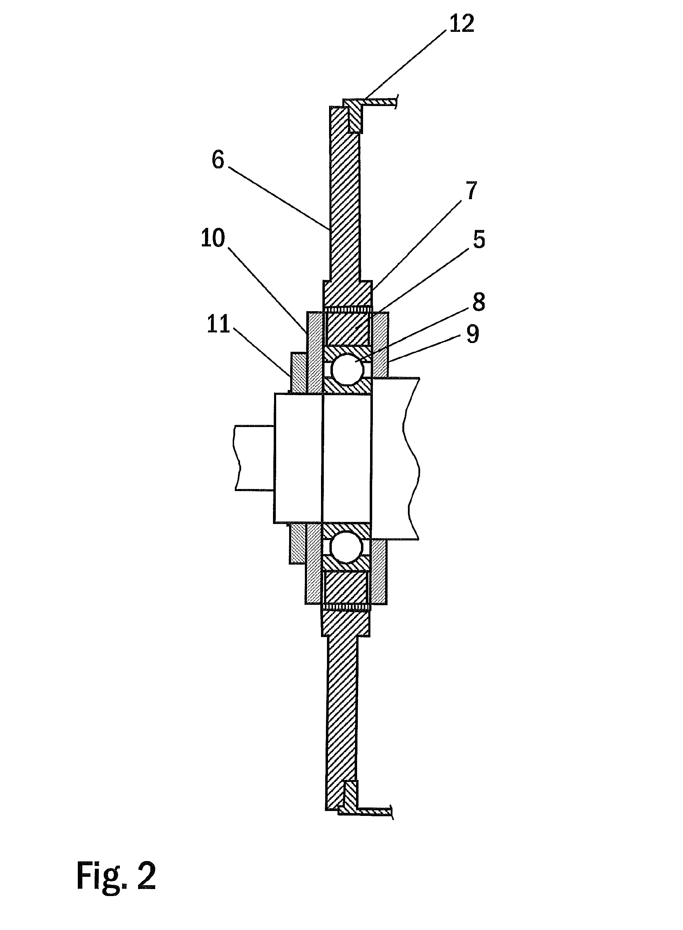

Figure 2 shows another end plate arrangement of a rotating electrical machine according to prior art. The end plate arrangement of a rotating electrical machine according to the prior art comprises an end plate inner ring 5 and an end plate outer ring 6. Furthermore, the end plate arrangement comprises an insulation ring 7. The rolling bearing is marked with a number 8. The end plate inner ring 5, the end plate outer ring 6, the insulation ring 7 and the rolling bearing are all fitted against a shaft plate, located on the machine side of the end plate and marked with a number 9. On the other side of the end plate arrangement of a rotating electrical machine according to prior art rolling bearing securing, lubricating and sealing components 10-11 are attached. The end plate outer ring 6 is fastened to the housing 12 of the electric machine.

The typical manufacturing and assembly process for an end plate arrangements of a rotating electrical machine according to prior art is quite troublesome and consists of a number of phases. First one needs the manufacture all the necessary parts, these including an end plate inner ring and an end plate outer ring as well as an insulating ring. For the assembly process first the end plate outer ring needs to be machined, secondly the end plate inner ring needs to be machined, thirdly the insulating ring needs to be machined. In the fourth phase the insulating ring is fitted and in the fifth phase insulating ring is secured in order to prevent the turning of the rings. In the sixth phase all the parts together are machined before fitting against the shaft plate of an end plate arrangement of a rotating electrical machine according to prior art.

The prior art an end plate arrangement manufacturing and assembly process for is very troublesome as it consists of a number of phases. Furthermore, the different parts of the assembly need to get moved around in between of the phases and this is also troublesome and resource consuming.

In rotating electrical machines according to prior art bearing currents and shaft voltages have been recognized as a problem causing damages to the rotating electrical machines and in particular to the rolling bearings of the rotating electrical machines. In rotating electrical machines according to prior art bearing current damage caused by electrical current is characterized by the appearance of either pits or transverse flutes burnt into the bearing race. Electrical pitting continues until the bearing loses its coefficient of friction, further increasing the losses and breaking up bearing surface.

In the case of a bearing fault in rotating electrical machines according to prior art the whole end plate arrangement needs to be replaced with the shaft bearing. The maintenance assembly process is difficult to handle as the end plate outer ring is typically quite large and heavy. Furthermore, the maintenance conditions, for example with wind turbines, may be demanding this placing extra burden on the changing the shaft bearing and the end plate arrangement.

The prior art an end plate arrangement manufacturing, maintenance and assembly process is very troublesome as it consists of a number of phases. Furthermore, the different parts of the assembly need to get moved around in between of the phases and this is also troublesome and resource consuming. Also the spare parts used in the maintenance assembly process are difficult to handle.

In today's demanding environment, the manufacturers of rotating electrical machines are constantly looking for improvements and cost savings in the manufacturing process as well as in the maintenance process. There is a demand in the market for a method for manufacturing an end plate arrangement of a rotating electrical machine that would improve the manufacturing process and provide savings when compared to the current prior art solutions. Likewise, there is a demand in the market for a method for an end plate arrangement of a rotating electrical machine as well as for a rotating electrical machine that would be easier to manufacture and to maintain than the current prior art solutions.

### BRIEF DESCRIPTION OF THE INVENTION

An object of the present invention is thus to provide a method and an apparatus for implementing the method so as to overcome the above problems and to alleviate the above disadvantages.

The objects of the invention are achieved by a method for manufacturing an end plate arrangement of a rotating electrical machine, said method comprising the step of:
- manufacturing an end plate outer ring,
   so that the method further comprises the step of:
- manufacturing a changeable end plate assembly, so that said end plate assembly comprises:
- a changeable end plate inner ring,
- a changeable insulation ring, and
- a changeable end plate securing ring;
   which end plate assembly is manufactured to be fitted between a rotor shaft rolling bearing of the rotating electrical machine and the end plate outer ring or the end frame of the rotating electrical machine.

Preferably, the end plate outer ring is manufactured not to be changed upon shaft bearing replacement. Alternatively, the end plate outer ring structure is manufactured integrated into an end frame of the rotating electrical machine.

Furthermore, the objects of the invention are achieved by an end plate arrangement of a rotating electrical machine, said rotating electrical machine comprising an end plate outer ring, so that said end plate arrangement comprises a changeable end plate assembly, which end plate assembly comprises:
- a changeable end plate inner ring,
- a changeable insulation ring, and
- a changeable end plate securing ring;
   which end plate assembly can be fitted between a rotor shaft rolling bearing of the rotating electrical machine and the end plate outer ring or the end frame of the rotating electrical machine.

Preferably in the end plate arrangement, the end plate outer ring is designed not to be changed upon shaft bearing replacement. Alternatively in the end plate arrangement, the end plate outer ring structure is integrated into an end frame of the rotating electrical machine.

Preferably, the changeable insulation ring has a U-shaped cross-section. Alternatively, the changeable insulation ring has an L-shaped cross-section.

Preferably, the said changeable end plate securing ring is placed at the side facing away from the rotating electrical machine. Alternatively, said changeable end plate securing ring is placed at the side facing towards the rotating electrical machine.

Preferably, said changeable end plate inner ring, and/or said changeable end plate securing ring comprise a seal, e.g. a seal ring, between said inner ring and/or said changeable end plate securing ring and the rolling bearing of the rotating electrical machine. Alternatively, said changeable end plate inner ring and/or said changeable end plate securing ring comprise a seal, e.g. a seal ring, between said inner ring and/or said changeable end plate securing ring and a rotor shaft of the rotating electrical machine.

Preferably, said changeable end plate assembly comprises fastening elements, which fastening elements are used to fasten the changeable end plate inner ring and the changeable insulation ring to the end plate outer ring or to the end frame of the rotating electrical machine. Preferably, said changeable end plate assembly comprises fastening elements, which fastening elements are used to fasten the end plate securing ring to the end plate inner ring.

Furthermore, the objects of the invention are achieved by a rotating electrical machine having an end plate arrangement and an end plate outer ring, so that said end plate arrangement comprises a changeable end plate assembly and an end plate outer ring, so that said end plate assembly comprises:
- a changeable end plate inner ring,
- a changeable insulation ring, and
- a changeable end plate securing ring;
   which end plate assembly can be fitted between a rotor shaft rolling bearing of the rotating electrical machine and the end plate outer ring or the end frame of the rotating electrical machine.

Preferably in the rotating electrical machine having an end plate arrangement, the end plate outer ring of the rotating electrical machine is designed not to be changed upon shaft bearing replacement. Alternatively in the rotating electrical machine having an end plate arrangement, the end plate outer ring structure is integrated into an end frame of the rotating electrical machine.

### BRIEF DESCRIPTION OF THE DRAWINGS

Figure 1 shows a basic structure of an end plate arrangement of a rotating electrical machine according to prior art;
Figure 2 shows another end plate arrangement of a rotating electrical machine according to prior art;

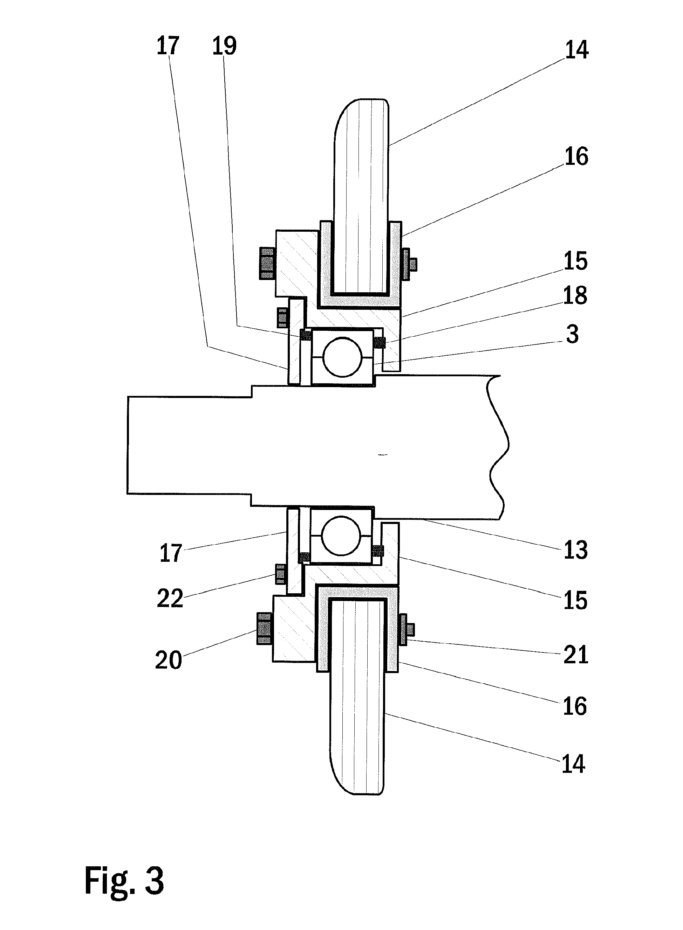

Figure 3 shows a cross-sectional view cut along the rotor shaft axis of one embodiment of an end plate arrangement of a rotating electrical machine according to the present invention;

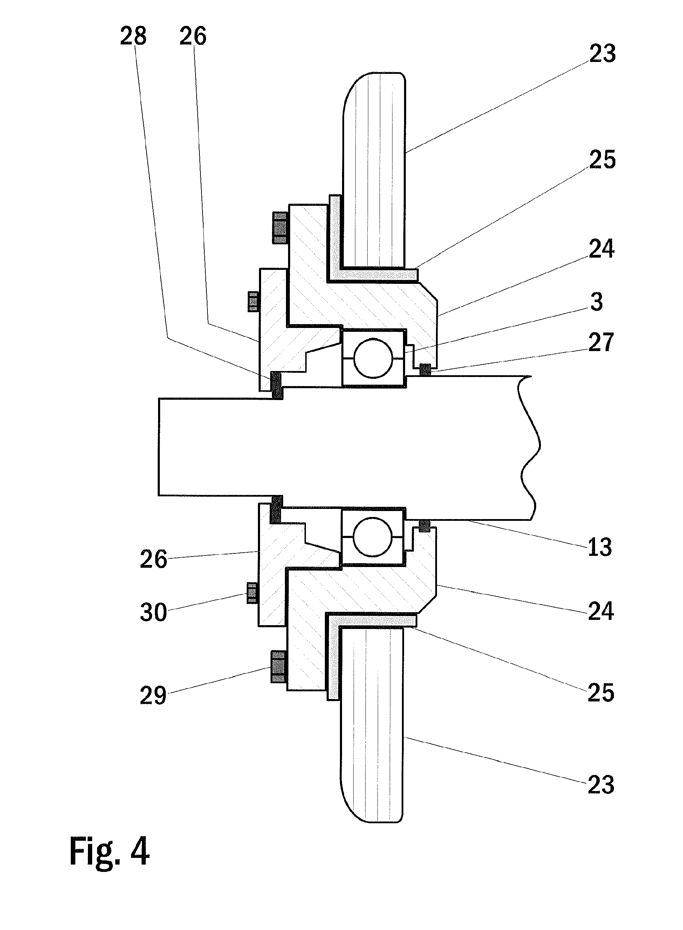

Figure 4 shows a cross-sectional view cut along the rotor shaft axis of another embodiment of an end plate arrangement of a rotating electrical machine according to the present invention; and

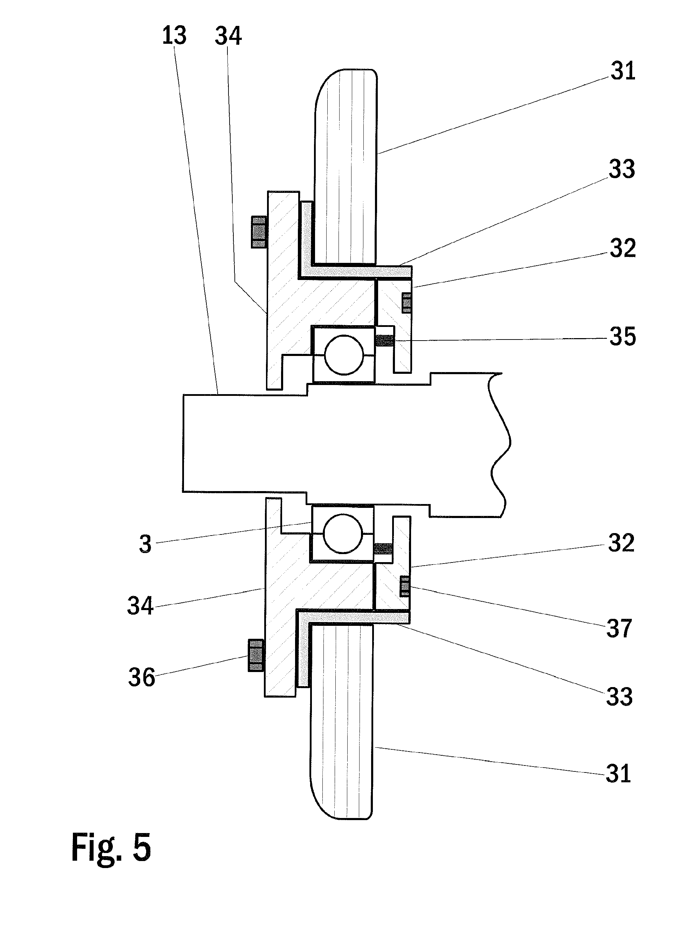

Figure 5 shows a cross-sectional view cut along the rotor shaft axis of a third embodiment of an end plate arrangement of a rotating electrical machine according to the present invention.

The prior art drawings of Figures 1 to 2 have been presented earlier. In the following, the invention will be described in greater detail by means of preferred embodiments with reference to the accompanying drawings of Figures 3 to 5.

### DETAILED DESCRIPTION OF THE INVENTION

Figure 3 shows a cross-sectional view cut along the rotor shaft axis of one embodiment of an end plate arrangement of a rotating electrical machine according to the present invention. A rolling bearing 3 is typically fitted directly to of the rotor shaft 13 of the rotating electrical machine according to the present invention. The rotating electrical machine according to the present invention also comprises an end plate outer ring 14. Alternatively, the rotating electrical machine according to the present invention comprises an end frame 14 of the rotating electrical machine into which end frame 14 a fixed end plate outer ring structure is integrated.

The end plate arrangement of a rotating electrical machine according to the present invention comprises a changeable end plate assembly 15-17, which end plate assembly 15-17 is fitted between the rolling bearing 3 and the end plate outer ring 14 or the end frame 14 of the rotating electrical machine. The changeable end plate assembly 15-17 according to the present invention comprises a changeable end plate inner ring 15, a changeable insulation ring 16 and a changeable end plate securing ring 17. The changeable end plate inner ring 15 is fitted directly to the rolling bearing 3 of the rotor shaft 13 of the rotating electrical machine. The changeable insulation ring 16 is fitted directly to the end plate outer ring 14 or to the end frame 14 of the rotating electrical machine into which end frame 14 a fixed end plate outer ring structure is integrated. The changeable insulation ring 16 can have a U-shaped cross-section. The changeable end plate inner ring 15 together with the rolling bearing 3 is fitted between the rotor shaft 13 of the rotating electrical machine and the changeable insulation ring 16. The changeable end plate assembly 15-17 according to the present invention is secured with a changeable end plate securing ring 17. The changeable end plate securing ring 17 can be placed at the side facing away from the rotating electrical machine.

The changeable end plate inner ring 15 according to the present invention may comprise a seal 18, e.g. a seal ring 18, between the end plate inner ring 15 and the rolling bearing 3 of the rotating electrical machine. Likewise, the changeable end plate securing ring 17 according to the present invention may comprise a seal 19, e.g. a seal ring 19, between the end plate securing ring 17 and the rolling bearing 3 of the rotating electrical machine. The changeable end plate assembly 15-17 may also have fastening elements 20, 21, which fastening elements 20, 21 are used to fasten the changeable end plate inner ring 15 and the changeable insulation ring 16 to the end plate outer ring 14 or to the end frame 14 of the rotating electrical machine into which end frame 14 a fixed end plate outer ring structure is integrated. The changeable end plate assembly 15-17 may also have fastening elements 22, which fastening elements 22 are used to fasten the changeable end plate securing ring 17 to the changeable end plate inner ring 15.

When a rolling bearing 3 of the rotating electrical machine needs to be changed changeable end plate assembly 15-17 according to the present invention makes this considerably more easy in comparison to the prior art solutions. The maintenance personnel only have to unlock the fastening elements 20-22 and thereafter to remove the old rolling bearing 3 and the old changeable end plate assembly 15-17. The end plate outer ring 14 does not need to be changed. The maintenance personnel can finish the maintenance work by fitting a new changeable insulation ring 16 and a new changeable end plate inner ring 15 together with a new rolling bearing 3 as well as fitting a new changeable end plate securing ring 17. The new changeable end plate assembly 15-17 is then fastened with fastening elements 20-22.

Figure 4 shows a cross-sectional view cut along the rotor shaft axis of another embodiment of an end plate arrangement of a rotating electrical machine according to the present invention. A rolling bearing 3 is typically fitted directly to of the rotor shaft 13 of the rotating electrical machine. The rotating electrical machine according to another embodiment of the present invention also comprises an end plate outer ring 23. Alternatively, the rotating electrical machine according to another embodiment of the present invention comprises an end frame 23 of the rotating electrical machine into which end frame 23 a fixed end plate outer ring structure is integrated.

The end plate arrangement of a rotating electrical machine according to another embodiment of the present invention comprises a changeable end plate assembly 24-26, which end plate assembly 24-26 is fitted between the rolling bearing 3 and the end plate outer ring 23 or the end frame 23 of the rotating electrical machine. The changeable end plate assembly 24-26 according to the present invention comprises a changeable end plate inner ring 24, a changeable insulation ring 25 and a changeable end plate securing ring 26. The end plate inner ring 24 is fitted directly to the rolling bearing 3 of the rotor shaft 13 of the rotating electrical machine. The insulation ring 25 is fitted directly to the end plate outer ring 23 or to the end frame 23 of the rotating electrical machine. The insulation ring 25 can have an L-shaped cross-section. The end plate inner ring 24 together with the rolling bearing 3 is fitted between the rotor shaft 13 of the rotating electrical machine and the insulation ring 25. The end plate assembly 24-26 according to the present invention is secured with the end plate securing ring 26. The end plate securing ring 26 can be placed at the side facing away from the rotating electrical machine.

The end plate inner ring 24 according to another embodiment of the present invention may comprise a seal 27, e.g. a seal ring 27, between the end plate inner ring 24 and the rotor shaft 13 of the rotating electrical machine. Likewise, the end plate securing ring 26 according to the present invention may comprise a seal 28, e.g. a seal ring 28, between the end plate securing ring 26 and the rotor shaft 13 of the rotating electrical machine. The end plate assembly 24-26 may also have fastening elements 29, which fastening elements 29 are used to fasten the changeable end plate inner ring 24 and the insulation ring 25 to the end plate outer ring 23 or to the end frame 23 of the rotating electrical machine. The end plate assembly 24-26 may also have fastening elements 30, which fastening elements 30 are used to fasten the end plate securing ring 26 to the end plate inner ring 24.

When a rolling bearing 3 of the rotating electrical machine needs to be changed end plate assembly 24-26 according to another embodiment of the present invention makes this considerably more easy in comparison to the prior art solutions. The maintenance personnel only have to unlock the fastening elements 29-30 and thereafter to remove the old rolling bearing 3 and the old end plate assembly 24-26. The end plate outer ring 23 does not need to be changed. The maintenance personnel can finish the maintenance work by fitting a new insulation ring 25 and a new end plate inner ring 24 together with a new rolling bearing 3 as well as fitting a new end plate securing ring 26. The new end plate assembly 24-26 is then fastened with fastening elements 29-30.

Figure 5 shows a cross-sectional view cut along the rotor shaft axis of a third embodiment of an end plate arrangement of a rotating electrical machine according to the present invention. A rolling bearing 3 is typically fitted directly to of the rotor shaft 13 of the rotating electrical machine. The rotating electrical machine according to a third embodiment of the present invention also comprises an end plate outer ring 31. Alternatively, the rotating electrical machine according to a third embodiment of the present invention comprises an end frame 31 of the rotating electrical machine into which end frame 31 a fixed end plate outer ring structure is integrated.

The end plate arrangement of a rotating electrical machine according to a third embodiment of the present invention comprises a changeable end plate assembly 32-34, which end plate assembly 32-34 is fitted between the rolling bearing 3 and the end plate outer ring 31 or the end frame 31 of the rotating electrical machine. The changeable end plate assembly 32-34 according to the present invention comprises a changeable end plate inner ring 34, a changeable insulation ring 33 and a changeable end plate securing ring 32. The end plate inner ring 34 is fitted directly to the rolling bearing 3 of the rotor shaft 13 of the rotating electrical machine. The insulation ring 33 is fitted directly to the end plate outer ring 31 or to the end frame 31 of the rotating electrical machine. The insulation ring 33 can have an L-shaped cross-section. The end plate inner ring 34 together with the rolling bearing 3 is fitted between the rotor shaft 13 of the rotating electrical machine and the insulation ring 33. The end plate assembly 32-34 according to the present invention is secured with the end plate securing ring 32. The end plate securing ring 32 can be placed at the side facing towards the rotating electrical machine.

The end plate securing ring 32 according to the present invention may comprise a seal 35, e.g. a seal ring 35, between the end plate securing ring 32 and the rolling bearing 3 of the rotating electrical machine. The end plate assembly 32-34 may also have fastening elements 36, which fastening elements 36 are used to fasten the changeable end plate inner ring 34 and the changeable insulation ring 33 to the end plate outer ring 31 or to the end frame 31 of the rotating electrical machine. The end plate assembly 32-34 may also have fastening elements 37, which fastening elements 37 are used to fasten the end plate securing ring 32 to the end plate inner ring 34.

When a rolling bearing 3 of the rotating electrical machine needs to be changed end plate assembly 32-34 according to a third embodiment of the present invention makes this considerably more easy in comparison to the prior art solutions. The maintenance personnel only have to unlock the fastening elements 36-37 and thereafter to remove the old rolling bearing 3 and the old end plate assembly 32-34. The end plate outer ring 31 does not need to be changed. The maintenance personnel can finish the maintenance work by fitting a new insulation ring 33; then fastening together a new end plate inner ring 34, a new rolling bearing 3 and a new end plate securing ring 32 and fitting these between said new insulation ring 33 and the rotor shaft 13 of the rotating electrical machine; and thereafter fastening the new end plate assembly 32-34 with fastening elements 36.

In the manufacturing process for an end plate arrangement of a rotating electrical machine according to the present invention the parts of the said end plate arrangement are manufactured to a changeable end plate assembly 15-17, 24-26, 32-34 comprising a changeable end plate inner ring 15, 24, 34 a changeable insulation ring 16, 25, 33 and a changeable end plate securing ring 17, 26, 32. In the manufacturing process according to the present invention an end plate outer ring 14, 23, 31 is manufactured not to be changed upon a bearing replacement. Alternatively, in the manufacturing process according to the present invention an end plate outer ring structure is integrated into an end frame 14, 23, 31 of the rotating electrical machine. The end plate arrangement manufacturing process according to the present invention is substantially easier in comparison to the prior art manufacturing processes.

In the case of a bearing fault in rotating electrical machines according to the present invention only the changeable end plate assembly 15-17, 24-26, 32-34 needs to be replaced with the shaft bearing. The maintenance assembly process according to the present invention is much easier than the prior art maintenance assembly process as the large and heavy end plate outer ring does not need to be changed upon a bearing replacement. Easy maintenance is especially valuable in demanding maintenance conditions, for example with wind turbines.

With the help of the solution according to the present invention the manufacturers of rotating electrical machines will be able to considerably improve the manufacturing process and maintenance assembly process and provide savings in comparison to the current prior art solutions. The solution according to the present invention may be utilised in any kind of rotating electrical machines.

It will be obvious to a person skilled in the art that, as the technology advances, the inventive concept can be implemented in various ways. The invention and its embodiments are not limited to the examples described above but may vary within the scope of the claims.

## Claims

1. A method for manufacturing an end plate arrangement of a rotating electrical machine, said method comprising the step of:
- manufacturing an end plate outer ring (14), (23), (31), **characterized by** the method further comprising the step of:
- manufacturing a changeable end plate assembly (15-17), (24-26), (32-34), so that said end plate assembly (15-17), (24-26), (32-34) comprises:
- a changeable end plate inner ring (15), (24), (34),
- a changeable insulation ring (16), (25), (33), and
- a changeable end plate securing ring (17), (26), (32);
which end plate assembly (15-17), (24-26), (32-34) is manufactured to be fitted between a rotor shaft rolling bearing (3) of the rotating electrical machine and the end plate outer ring (14), (23), (31) or the end frame (14), (23), (31) of the rotating electrical machine.

2. A method according to claim 1, **characterized in that** the end plate outer ring (14), (23), (31) is manufactured not to be changed upon shaft bearing replacement.

3. A method according to claim 1 or claim 2, **characterized in that** the end plate outer ring structure is manufactured integrated into an end frame (14), (23), (31) of the rotating electrical machine.

4. An end plate arrangement of a rotating electrical machine, said rotating electrical machine comprising an end plate outer ring (14), (23), (31), **characterized in that** said end plate arrangement comprises a changeable end plate assembly (15-17), (24-26), (32-34), so that said end plate assembly (15-17), (24-26), (32-34) comprises:
- a changeable end plate inner ring (15), (24), (34),
- a changeable insulation ring (16), (25), (33), and
- a changeable end plate securing ring (17), (26), (32);
which end plate assembly (15-17), (24-26), (32-34) can be fitted between a rotor shaft rolling bearing (3) of the rotating electrical machine and the end plate outer ring (14), (23), (31) or the end frame (14), (23), (31) of the rotating electrical machine.

5. An end plate arrangement according to claim 4, **characterized in that** the end plate outer ring (14), (23), (31) is designed not to be changed upon shaft bearing replacement.

6. An end plate arrangement according to claim 4, **characterized in that** the end plate outer ring structure is integrated into an end frame (14), (23), (31) of the rotating electrical machine.

7. An end plate arrangement according to any one of claims 4 to 6, **characterized in that** the changeable insulation ring (16) has a U-shaped cross-section.

8. An end plate arrangement according to any one of claims 4 to 6, **characterized in that** the changeable insulation ring (25), (33) has an L-shaped cross-section.

9. An end plate arrangement according to any one of claims 4 to 8, **characterized in that** said changeable end plate securing ring (17), (26) is placed at the side facing away from the rotating electrical machine.

10. An end plate arrangement according to any one of claims 4 to 8, **characterized in that** said changeable end plate securing ring (32) is placed at the side facing towards the rotating electrical machine.

11. An end plate arrangement according to any one of claims 4 to 10, **characterized in that** said changeable end plate inner ring (15), and/or said changeable end plate securing ring (17), (32) comprise a seal (18), (19), (35), e.g. a seal ring 18), (19), (35), between said inner ring (15) and/or said changeable end plate securing ring (17), (32) and the rolling bearing (3) of the rotating electrical machine.

12. An end plate arrangement according to any one of claims 4 to 10, **characterized in that** said changeable end plate inner ring (24) and/or said changeable end plate securing ring (26) comprise a seal (27), (28), e.g. a seal ring (27), (28), between said inner ring (24) and/or said changeable end plate securing ring (26) and a rotor shaft (13) of the rotating electrical machine.

13. An end plate arrangement according to any one of claims 4 to 12, **characterized in that** said changeable end plate assembly (15-17), (24-26), (32-34) comprises fastening elements (20), (21), (29), (36), which fastening elements (20), (21), (29), (36) are used to fasten the changeable end plate inner ring (15), (24), (34) and the changeable insulation ring (16), (25), (33) to the end plate outer ring (14), (23), (31) or to the end frame (14), (23), (31) of the rotating electrical machine.

14. An end plate arrangement according to any one of claims 4 to 13, **characterized in that** said changeable end plate assembly (15-17), (24-26), (32-34) comprises fastening elements (22), (30), (37), which fastening elements (22), (30), (37) are used to fasten the end plate securing ring (17), (26), (32) to the end plate inner ring (15), (24), (34).

15. A rotating electrical machine having an end plate arrangement and an end plate outer ring (14), (23), (31), **characterized in that** said end plate arrangement comprises a changeable end plate assembly (15-17), (24-26), (32-34) and an end plate outer ring (14), (23), (31), so that said end plate assembly (15-17), (24-26), (32-34) comprises:
- a changeable end plate inner ring (15), (24), (34),
- a changeable insulation ring (16), (25), (33), and
- a changeable end plate securing ring (17), (26), (32);
which end plate assembly (15-17), (24-26), (32-34) can be fitted between a rotor shaft rolling bearing (3) of the rotating electrical machine and the end plate outer ring (14), (23), (31) or the end frame (14), (23), (31) of the rotating electrical machine.

16. A rotating electrical machine according to claim 15, **characterized in that** the end plate outer ring (14), (23), (31) of the rotating electrical machine is designed not to be changed upon shaft bearing replacement.

17. A rotating electrical machine according to claim 15, **characterized in that** the end plate outer ring structure is integrated into an end frame (14), (23), (31) of the rotating electrical machine.
